# EUROPÄISCHE PATENTSCHRIFT

(11) **EP 2 617 838 B1**
(45) Veröffentlichungstag und Bekanntmachung des Hinweises auf die Patenterteilung: **10.01.2018**
(21) Anmeldenummer: 12151907.8
(22) Anmeldetag: 20.01.2012
(51) Int. Cl.: C21D 1/74, C21D 9/00, B23K 1/008, F27B 9/02, F27B 9/04, F27D 99/00

(54) **Verfahren zum Betreiben eines Ofens und Ofen**
Method for operating an oven and oven
Procédé de conduite d'un four et four

(43) Veröffentlichungstag der Anmeldung: 24.07.2013
(73) Patentinhaber: Schwartz GmbH, 52152 Simmerath (DE)
(72) Erfinder: Schwartz, Rolf-Josef, 52152 Simmerath (DE)
(74) Vertreter: KNH Patentanwälte

(56) Entgegenhaltungen:
- FR-A1- 2 333 866
- US-A- 3 982 887

## Beschreibung

Die Erfindung betrifft ein Verfahren zum Betrieb eines Ofens zur Wärmebehandlung von metallischen Bauteilen, speziell zum Löten oder Sintern, insbesondere zum Hochtemperaturlöten. Weiterhin betrifft die Erfindung einen Ofen zum Durchführen des Verfahrens.

Unter Löten versteht man das stoffschlüssige Fügen von Metallen, bei dem die Oberfläche des Grundwerkstoffes nicht aufgeschmolzen wird. Nur das metallische Lot liegt während des Prozesses in flüssiger Form vor. Es wird zwischen Weich-, Hart- und Hochtemperaturlöten unterschieden, wobei das Kriterium für die Einteilung die Liquidustemperatur des Lotes ist. Bis zu einer Liquidustemperatur von 450°C spricht man von Weichlöten, ab 450°C von Hartlöten. Lötvorgänge mit einer Liquidustemperatur von über 900°C fallen dabei unter den Begriff Hochtemperaturlöten.

Grundlagen des Lötens sind beispielsweise in Pfeifer, Nacke, Beneke: Praxishandbuch Thermoprozess-Technik / Bd. 2. Anlagen - Komponenten - Sicherheit (ISBN 978-3-8027-2955-3) offenbart.

Löten kommt nach Jahren des Rückgangs in vielen Wirtschaftszweigen wieder vermehrt zum Einsatz. Ein großes Gebiet sind Wärmetauscher, die im Zuge des Umweltschutzes zur Wärmerückgewinnung bei unterschiedlichen streng voneinander zu trennenden Medien die bei weitem häufigste Anwendung für das Ofenlöten finden. Dabei ist das Ofenlöten ein Lötverfahren, bei dem die Fügeteile in einem Ofen mit eingelegtem Lot aufgeheizt werden. Die Oberflächen der Fügeteile müssen regelmäßig vor dem Lötvorgang gereinigt. Um ein oxydieren der gereinigten Fügeteile zu verhindern, wird üblicherweise unter Schutzgas oder im Vakuum gelötet. Die Luft im Ofen wird evakuiert und/oder dieser mit einem Schutzgas gefüllt. Die Vorteile des Ofenlötens liegen im spannungs- und verzugsfreien Löten durch gleichmäßige Erwärmung der Fügeteile. Es werden beliebig viele Lötstellen unter Verzicht auf Flussmittel in einem Arbeitsgang gefertigt. Eine gleichzeitige Wärmebehandlung der Grundwerkstoffe ist in einem Arbeitsgang ebenfalls möglich.

Für das Ofenlöten geeignete Öfen sind chargenweise arbeitende Geräte wie Kammeröfen oder kontinuierlich arbeitende Öfen mit einem Mittel zum Transport des Lötgutes durch den Ofen, wie beispielsweise ein Förderband oder angetriebene Rollen.

Voraussetzung für das Herstellen einer Lötverbindung sind metallisch reine und oxidfreie Oberflächen, ohne die eine Benetzung mit Lot unmöglich ist. Bei Anwesenheit eines Elektrolyten (z. B. Feuchtigkeit) entstehen galvanische Elemente wie ein Lokalelement, die zu verstärkter Korrosion führen können. Lokalelemente sind kleinflächige Korrosionselemente (oder Kontaktelemente), die mit bloßem Auge kaum zu erkennen und deutlich kleiner als 1 mm² sind.

Die Bildungsenthalpie ist für die meisten Metalloxide negativ, d.h. sie sind in einer Sauerstoffatmosphäre stabil. Im Gegensatz dazu sind die Metalle instabil.

Meist werden die zu verlötenden Blechteile gefettet und in Form gepresst. Das Fett muss vor dem Lötprozess entfernt werden. Großserien-Aluminium-Wärmetauscher werden ausschließlich in automatischen CAFB-Lötanlagen (Controlled Atmosphere Flux-Brazing-Lötanlagen) gelötet. Das Verfahren eignet sich ebenso wie das VAB-Verfahren (Vacuum Atmosphere Brazing-Verfahren) für das Löten von Stahl, Edelstahl, Kupfer, Nickel sowie edlere Metalle. Als Ursache dafür sind die Oxide der Metalloberflächen zu sehen, welche sich bei einem bestimmten Sauerstoff-Partialdruck bilden. Da die Neigung zur Oxidation bei Metallen mit zunehmender Temperatur steigt, müssen beim Lötprozess Gegenmaßnahmen ergriffen werden, die auf das angewendete Lötverfahren abgestimmt sind.

Eine Möglichkeit der Verhinderung von Oxidschichten ist das Löten im Vakuumofen. Das Metalloxid löst sich durch dessen geringen Dampfdruck auf und eine Diffusion des Lotes ist nach Erreichen des Schmelzpunktes möglich. Solche Öfen sind allerdings in der Herstellung und im Betrieb sehr aufwändig.

Eine weitere Möglichkeit ist die Verwendung von Schutzgasen. Dabei ist die Verwendung von Wasserstoff als Schutzgas wünschenswert. Wasserstoff hat eine um ca. 7-fach höhere Wärmeleitfähigkeit gegenüber dem üblichen Mischungsgas Stickstoff. Darüber hinaus wirkt Wasserstoff als Reduktionsmittel. Bei einer bestimmten Temperatur stellt sich ein Gleichgewicht zwischen Wasserstoff und Sauerstoff in Form von H₂/H₂O ein, wodurch die Qualität der Atmosphäre durch einfache Bestimmung des Taupunktes gemessen und geregelt werden kann. Für das Löten von Edelstählen mit einem Chromgehalt von bis zu 18 % ist ein Taupunkt von ca. - 50 °C erforderlich. Eine wichtige Größe stellt der prozentuale Gehalt des Wasserstoffs in der Atmosphäre dar, da für das H₂/H₂0-Verhältnis nur die absoluten Werte maßgebend sind.

Wasserstoff ist allerdings relativ teuer, so dass ein Verschleppen von Wasserstoff aus dem Ofen heraus minimiert werden sollte. Darüber hinaus bildet Wasserstoff in Verbindung mit Sauerstoff das hochexplosive Knallgas, so dass der Austritt von freiem Wasserstoff in die Atmosphäre außerhalb des Ofens nur in geringem Maße hinnehmbar ist. Im Stand der Technik sind zur Reduktion der Wasserstoffverschleppung Flammvorhänge an den Ein- und Ausfuhröffnungen solcher Öfen bekannt, in denen austretender Wasserstoff abfackelt. Solche Flammvorhänge können aber Schäden an den Bauteilen hervorrufen. Zumindest an der Einfuhröffnung sind die Bauteile noch nicht verlötet und daher empfindlich gegenüber einem unkontrollierten Wärmeeintrag. Darüber hinaus verbraucht ein solcher Ofen erhebliche Mengen Wasserstoff.

Aus der FR 2 333 866 A1 ist ein Verfahren zur Wärmebehandlung von Stangen aus Edelstahl unter wasserstoffhaltiger Schutzgasatmosphäre bekannt. Das Schutzgas bewegt sich in Gegenrichtung der zu behandelnden Werkstücke. Aus der deutschen Offenlegungsschrift DE 10 2009 051 183 A1 ist ein Wärmebehandlungsofen zum Löten von wenigstens einem Bauteil mit einem Ofenkanal mit einer Einfuhröffnung und einer Ausfuhröffnung, einer Fördereinrichtung zum Bewegen des wenigstens einen mit Wärme zu behandelnden Bauteiles in dem Ofenkanal und einem mit Schutzgas gefüllten Wärmebehandlungsabschnitt des Ofenkanals bekannt. Weiterhin weist der Wärmebehandlungsofen eine Heizeinrichtung zum Erwärmen des Schutzgases und/oder der Bauteile in dem Wärmebehandlungsabschnitt auf Der Wärmebehandlungsofen ist als Buckelofen ausgebildet, wobei der Wärmebehandlungsabschnitt des Ofens gegenüber jeweils einem Trennabschnitt an der Ein- und Ausfuhröffnung höher angeordnet ist. Die Einfuhröffnung mündet in einen Trennabschnitt des Ofenkanales. Die Bauteile werden dabei in dem Trennabschnitt mit einer Bewegungskomponente nach oben in dem Trennabschnitt gefördert. Der Trennabschnitt weist somit eine Steigung auf und mündet in den Wärmebehandlungsabschnitt. In dem Wärmebehandlungsabschnitt mit einer Heizeinrichtung ist Wasserstoff als Schutzgas vorgesehen. In dem Wärmebehandlungsabschnitt werden die Bauteile und das Schutzgas auf hohe Temperaturen, z. B. für Bauteile aus Aluminium auf 600°C oder für Bauteile aus Edelstahl auf bis zu 1200°C, erwärmt und dort beispielsweise verlötet. Die Heizeinrichtung erwärmt dabei sowohl das Schutzgas als auch die Bauteile aufgrund einer Wärmestrahlung aus der Heizeinrichtung. Der im Wesentlichen horizontal ausgerichtete Wärmebehandlungsabschnitt mündet anschließend in einen Ofenkanal, der ein Gefälle aufweist, d. h. die Bauteile werden mit einer Bewegungskomponente nach unten gefördert. Am Ende des Ofenkanales nach dem Wärmebehandlungsabschnitt treten die Bauteile aus einer Ausfuhröffnung wieder in die Umgebungsatmosphäre aus. In den Trennabschnitten ist Stickstoff als Trenngas enthalten. Wasserstoff weist im Normalzustand eine geringere Dichte als Stickstoff auf, so dass sich innerhalb des Ofenkanales das Trenngas unterhalb des Schutzgases anordnet. Zwischen dem Trenngas und dem Schutzgas bildet sich somit in dem Ofenkanal eine Grenzfläche aus. Eine Vorhangbox mit Fäden bzw. Streifen in dem Ofenkanal im Bereich der Einfuhröffnung verhindert, dass größere Mengen an Trenngas aus der Einfuhröffnung austreten. Durch eine Einlassöffnung für Stickstoff wird das Trenngas in den Trennabschnitt eingeführt. In analoger Weise wird in den Ofenkanal durch eine Einlassöffnung Wasserstoff als Schutzgas im Bereich der Ausfuhröffnung eingeleitet. Das kontinuierliche Einleiten von Schutzgas in den Ofenkanal und damit auch in den Wärmebehandlungsabschnitt ist erforderlich, damit das Schutzgas in einer ausreichend reinen Konzentration in dem Wärmebehandlungsabschnitt während des Betriebes des Wärmebehandlungsofens vorliegt. Der Überschuss an Schutzgas tritt dabei in einen Seitenkanal und von dort in einen Abzugskanal ein. Der Abzugskanal weist dabei Luftzuführöffnungen auf. Durch die Luftzuführöffnungen wird dem Abzugskanal Luft zugeführt und an einem Ende des Abzugskanals wird das überschüssige Schutzgas verbrannt. Auch in den Trennabschnitt wird kontinuierlich durch die Einlassöffnung Stickstoff zugeführt. Dies ist erforderlich, damit in dem Trennabschnitt das Trenngas in ausreichender reiner Konzentration vorhanden ist. Der Überschuss an Trenngas tritt dabei sowohl durch die Einfuhröffnung als auch teilweise durch den Abzugskanal in die Umgebung aus. Ein Teil des Überschusses an Schutzgas wird neben dem Abzugskanal auch aus der Ausfuhröffnung ausgeleitet. Um an der Ausfuhröffnung möglichst wenig Schutzgas auszuleiten, ist an dieser Stelle eine Vorhangbox angeordnet. Damit tritt an der Ausfuhröffnung eine Grenzfläche zwischen dem Schutzgas und der Umgebungsatmosphäre auf, so dass an der Ausfuhröffnung ein Flammvorhang vorgesehen ist. Ein derartiger Flammvorhang an der Ausfuhröffnung führt zwar im Allgemeinen an den Bauteilen zu kleinem Schaden, weil an der Ausfuhröffnung die Bauteile bereits mit Wärme behandelt sind, bewirkt aber einen hohen Verbrauch an Schutzgas. Darüber hinaus verbraucht dieser Ofen große Mengen an Trenngas.

Ein weiterer Nachteil des Buckelofens ist darin zu sehen, dass die Bauteile nicht nur horizontal, sondern auch schräg nach oben beziehungsweise schräg nach unten bewegt werden, wodurch sich zu verlötende Teile in ihrem ungelöteten Zustand und wenn das Lot im zumindest teilaufgeschmolzenen Zustand noch weich ist, intern verschieben können.

Aufgabe der Erfindung ist es daher, ein Verfahren zur Wärmebehandlung in Form von Löten oder Sintern eines metallischen Bauteils unter einem Wasserstoff enthaltenden Schutzgas bereitzustellen, wobei eine ausreichende Reinheit der Atmosphäre zumindest in dem Abschnitt des Ofens bereit steht, in dem die Lötung oder Sinterung erfolgt, und wobei der Verbrauch von Schutzgas minimiert wird.

Weiterhin ist es Aufgabe der Erfindung, einen Durchlaufofen zur Durchführung des Verfahrens anzugeben.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2 bis 5. Die Aufgabe wird ferner durch einen Durchlaufofen nach Anspruch 6 gelöst. Vorteilhafte Ausführungsformen des Durchlaufofens ergeben sich aus den Unteransprüchen 7 bis 11.

Erfindungsgemäß wird zur Wärmebehandlung eines metallischen Bauteils dieses zunächst in eine Vakuumkammer eingebracht. Die Kammer wird geschlossen und Vakuum gezogen. Nach Erreichen eines zuvor definierten Unterdrucks, beispielsweise von 10 bis 100 mbar wird die Vakuumkammer zu einem angrenzenden Wärmebehandlungsabschnitt, der mit einem Wasserstoff enthaltenden Schutzgas gefüllt ist, geöffnet und das metallische Bauteil in diesen Abschnitt verbracht. Dort erfährt das Bauteil unter der Schutzgasatmosphäre seine Wärmebehandlung. Da der Wasserstoff aus den Metalloxiden den Sauerstoff durch Bildung von H₂O löst, steigt der Taupunkt der Schutzgasatmosphäre unzulässig an. Der Wasserstoff aus dem Wärmebehandlungsabschnitt wird deshalb in einem Molekularsieb gereinigt. Bei dieser Reinigung werden dem Wasserstoff Wassermoleküle entzogen. Ein geeignetes Molekularsieb weist dabei in seinem Inneren Zeolithe, das heißt kristalline Alumosilikate, auf, die eine große innere Oberfläche besitzen. Es werden dabei Oberflächen von beispielsweise ca. 600 - 700 m²/g erreicht. Die Zeolithe weisen einen im Wesentlichen einheitlichen Porendurchmesser in der Größenordnung der zu filternden Moleküle auf. Für die Filterung von Wassermolekülen hat sich ein Porendurchmesser von ca. 0,3 - 0,4 nm als geeignet erwiesen. Nach erfolgter Wärmebehandlung wird das metallische Bauteil erneut in eine Vakuumkammer verbracht, in der nach dem Schließen der Kammer Vakuum gezogen wird. Nach Erreichen eines zuvor definierten Unterdrucks von beispielsweise 10- 100 mbar wird die Vakuumkammer zur Außenatmosphäre hin geöffnet und das metallische Bauteil aus dem Durchlaufofen transportiert. Durch das Evakuieren vor und nach der Wärmebehandlung wird vermieden, dass sich das Schutzgas mit anderen Gasen, insbesondere mit Luftsauerstoff, vermischen kann. Darüber hinaus entweichen keine größeren Mengen Wasserstoff in die Atmosphäre außerhalb des Durchlaufofens, wodurch der Explosions- oder Brandgefahr vorgebeugt wird und der Wasserstoffverbrauch des Durchlaufofens minimiert wird. Durch die Reinigung des Schutzgases steht ausreichend reines recyceltes Schutzgas für den Prozess zur Verfügung.

In einer vorteilhaften Ausführungsform wird der Wasserstoff aus dem Wärmebehandlungsabschnitt kontinuierlich während der Wärmebehandlung gereinigt. Alternativ kann der Wasserstoff aber auch diskontinuierlich gereinigt werden. Dazu hat es sich als vorteilhaft erwiesen, wenn durch eine Taupunktmessung der Ofenatmosphäre der Reinigungsbedarf ermittelt wird und die Reinigung bei Erreichen eines zuvor definierten Grenzwertes, beispielsweise zwischen -30 und -50°C, gestartet wird. Dies kann geschehen, indem erst bei Erreichen dieses Grenzwertes das Schutzgas aus dem Wärmebehandlungsabschnitt abgesaugt, gereinigt, und dem Wärmebehandlungsabschnitt wieder zugeführt wird. Dabei wird das Schutzgas aus einem Endbereich des Wärmebehandlungsabschnitts abgesaugt, und das gereinigte Schutzgas in einem Mittelbereich des Wärmebehandlungsabschnitts wieder zugeführt. In einer vorteilhaften Ausführungsform schließt die Wärmebehandlung ein Lötverfahren ein. Dabei besteht das metallische Bauteil aus mindestens zwei Einzelteilen, die an einander angrenzen und durch ein Lotmaterial, das sich beispielsweise pastenförmig zwischen den Einzelteilen befindet, voneinander beabstandet sind. Es können auch Ringe oder Folien aus Lot verwendet werden. Während der Wärmebehandlung schmilzt das Lot auf und diffundiert in die Oberflächen der Einzelteile ein.

Ein erfindungsgemäßer Durchlaufofen weist einen Wärmebehandlungsabschnitt auf, der eine Ofenatmosphäre aufweist, die mit Wasserstoff als Schutzgas geflutet werden kann, und weist weiter einen Endbereich und einen Mittenbereich auf, wobei mindestens eine Vakuumkammer an den Wärmebehandlungsabschnitt angrenzt, und wobei die Vakuumkammer gasdicht mit dem Wärmebehandlungsabschnitt verbunden ist, und wobei der Durchlaufofen weiterhin ein Molekularsieb zum Ausfiltern von Wassermolekülen aus dem die Ofenatmosphäre bildenden Gas aufweist.

Es hat sich als vorteilhaft erwiesen, wenn der Durchlaufofen zwei Vakuumkammern aufweist, wobei eine Vakuumkammer in Durchlaufrichtung vor und eine Vakuumkammer in Durchlaufrichtung nach dem Wärmebehandlungsabschnitt angeordnet ist. Mit einer solchen Anordnung ist es möglich zu verhindern, dass größere Mengen Gas aus der Atmosphäre außerhalb des Ofens in die Ofenkammer gelangen und sich mit dem Schutzgas, das sich in der Ofenkammer befindet, vermischen. Ebenso kann verhindert werden, dass größere Mengen Schutzgas aus der Ofenkammer in die Atmosphäre außerhalb des Ofens entweichen. Schutzgas kann eingespart werden, und außerhalb des Ofens bildet sich keine eventuell explosive Mischung von Schutzgas und Luftsauerstoff.

In einer weiteren Ausführungsform weist der Durchlaufofen ein Mittel zur Taupunktmessung der Ofenatmosphäre auf. Durch die Messung des Taupunkts kann bestimmt werden, wann die Atmosphäre gereinigt werden sollte. Der Durchlaufofen weist einen Endbereich des Wärmebehandlungsabschnitts auf, wobei der Endbereich eine Entnahmeöffnung für den Wasserstoff aus der Ofenatmosphäre aufweist. Der Wasserstoff kann durch das Molekularsieb geleitet werden und in gereinigter Form der Ofenatmosphäre wieder zugesetzt werden. Dies geschieht in einem Mittenbereich des Wärmebehandlungsabschnitts wobei dieser Mittenbereich dazu eine Zuführungsöffnung aufweist.

Ein Vorteil des erfindungsgemäßen Ofens ist die im Wesentlichen horizontale Fördertechnik, wodurch die Gefahr des gegenseitigen Verrutschens der Lötbaugruppen minimiert ist. Weiterhin weist der erfindungsgemäße Ofen eine nahezu uneingeschränkte Durchgangshöhe für die der Wärmebehandlung zu unterziehenden Metallteile auf. Durch den Schleusenbetrieb mit den vor- und nachgeschalteten Vakuumkammern wird der Gasverbrauch minimiert, was sich insbesondere bei hohen zu behandelnden Metallteilen positiv bemerkbar macht, da der Schutzgasverbrauch mit der vierten Potenz der Durchgangshöhe steigt. Bei konventionellen Öfen wird der Prozess aus dieser Sicht sehr schnell unwirtschaftlich.

In einer weiteren Ausführungsform weist der Durchlaufofen mindestens eine antreibbare Rolle zum Transport eines metallischen Bauteils auf. Besonders bevorzugt ist diese Rolle durch die seitlichen Ofenwände hindurchgeführt und in einer Wälzlagereinheit außerhalb der Ofenkammer aufgenommen. Üblicherweise sind die Lager als Kugellager ausgebildet. Da die Temperatur an der Außenseite der Ofenwand der Ofenkammer nur etwa 100°C beträgt, können Kugellager mit Schmierstoffen im Inneren zum Einsatz kommen, die die Laufeigenschaften der Kugellager verbessern, sowie deren Lebensdauer verlängern.

Es hat sich als vorteilhaft erwiesen, wenn der Rollenherdofen ein Spülsystem für die Wälzlagereinheit aufweist, das dazu ausgebildet ist, ein Spülgas durch die Wälzlagereinheit zu leiten, wobei das Spülgas von einer von der Ofenwand abgewandten Seite der Wälzlagereinheit durch die Wälzlagereinheit und durch die Öffnung der Ofenwand hindurch in die Ofenkammer des Rollenherdofens leitbar ist und wobei das Spülgas mit einem Druck bereitstellbar ist, der größer ist als ein Innendruck in der Ofenkammer des Rollenherdofens. Während des Betriebs des Rollenherdofens führen Verschmutzungen des Schmierstoffes und/oder Verringerungen der Schmierstoffmenge häufig zu einer Reduzierung der Lebensdauer der Kugellager für die Rollen. Ursache dafür kann beispielsweise aus dem Rollenherdofen austretendes Ofengas sein, das durch die Öffnungen in der Ofenwand aus der Ofenkammer nach außen gelangt und dabei auch durch die an der Außenseite der Ofenwand angeordneten Kugellager strömt. Dabei werden die während der Rollendrehungen und der damit verbundenen Reibung an der keramischen Isolierwand im Ofen entstehenden Partikel durch das Ofengas teilweise mit nach außen befördert und beim Durchströmen in die Kugellager eingetragen. Bedingt durch die hohe Temperatur des Ofengases sowie der Beladung mit aerosolen Keramikpartikeln wird außerdem der Schmierstoff langsam aufgelöst, sodass sich die Schmierstoffmenge zeitabhängig entsprechend reduziert. Durch die beschriebene Spülung der Wälzlagereinheit wird die Lebensdauer der Wälzlager deutlich verbessert. Darüber hinaus ist der Austritt von Ofengas in die Außenatmosphäre wegen des dadurch erhöhten Gasverbrauchs und der eventuellen Bildung einer explosionsfähigen Gasmischung nicht möglich. Durch die beschriebene Spülung der Wälzlagereinheit wird dem Austritt von Ofengas in die Außenatmosphäre entgegen gewirkt. Als Spülgas kann beispielsweise Stickstoff eingesetzt werden.

Durch das Spülgas wird die Hinterisolierung der Wärmedämmung des Ofenkörpers bis zu einer vorgesehenen metallischen Diffusionssperre wasserstofffrei gespült, wodurch die Außenwandtemperatur des Ofenkörpers geringer wird und eine Energieeinsparung möglich wird. Beispielsweise weist Stickstoff nur ca. ein Siebtel der Wärmeleitfähigkeit von Wasserstoff auf. Wird Stickstoff als Spülgas eingesetzt, wird die thermische Isolierfähigkeit um nahezu das Siebenfache verbessert, wodurch die Außenwandtemperatur des Ofenkörpers signifikant erniedrigt und eine deutliche Energieeinsparung erreicht wird.

Eine weitere Ausführungsform der Lagerung beinhaltet eine Sperrgaskammer, über die die Dichtigkeit der Lagereinheit stets überprüft wird.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- **Fig. 1**: Ellingham-Richardson-Diagramm
- **Fig. 2**: einen erfindungsgemäßen Durchlaufofen in schematischer Darstellung
- **Fig. 3**: Lagerung einer Rolle eines erfindungsgemäßen Durchlaufofens

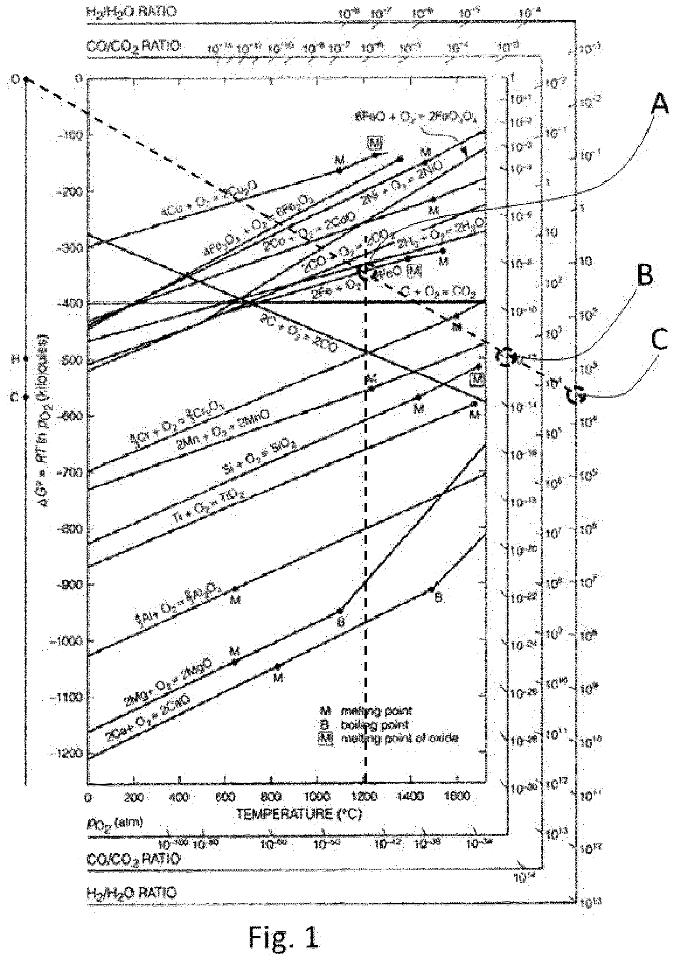

Die Bildungsenthalpie ist für die meisten Metalloxide negativ, d.h. sie sind in einer Sauerstoffatmosphäre stabil. Im Gegensatz dazu sind die Metalle instabil. Zur Veranschaulichung der Bedingungen, unter denen ein Oxid gebildet werden kann, wurde das Ellingham-Richardson-Diagramm eingeführt **(****Fig. 1****).** In diesem Diagramm ist die Bildungsenthalpie ΔG⁰ als Funktion der Temperatur dargestellt. Anhand dieser Auftragung kann man Aussagen zur relativen Stabilität der Oxide machen. Die Stabilität des Oxids nimmt mit Abnahme der ΔG⁰ -Werte zu. Mit zunehmender Temperatur steigen die Kurven an, da die Oxidbildung eine Abnahme der Entropie und damit einen Anstieg der Enthalpie zur Folge hat. Auf der rechten Seite des in Fig. 1 dargestellten Diagramms kann man den Dissoziationsdruck des Oxids bestimmen. Dafür wird eine Linie gezogen, ausgehend vom Punkt "O" auf der linken Seite des Diagramms über den ΔG⁰ -Wert für eine bestimmte Temperatur bis zur p_{O2} - Skala auf der rechten Seite. Der Schnittpunkt mit der p_{O2} - Linie gibt den Dissoziationsdruck für das Oxid an. Beispielsweise sind die Verhältnisse für Fe/FeO bei 1.200°C in das Diagramm der Figur 1 eingetragen. Ausgehend von der Temperatur 1.200°C bildet der Punkt "A" den ΔG⁰ -Wert. Die Gerade von "O" durch "A" schneidet die p_{O2} - Skala im Punkt "B", an dem ein Dissoziationsdruck für FeO von 10⁻¹² atm abgelesen werden kann. Die Verlängerung dieser Linie schneidet die H₂/H₂O-Verhältnisskala im Punkt "C" zwischen 10³ und 10⁴, so dass man bei einem H₂/H₂O-Verhältnis von 10⁴ auf der sicheren Seite liegt, um die Bildung von FeO verhindern zu können.

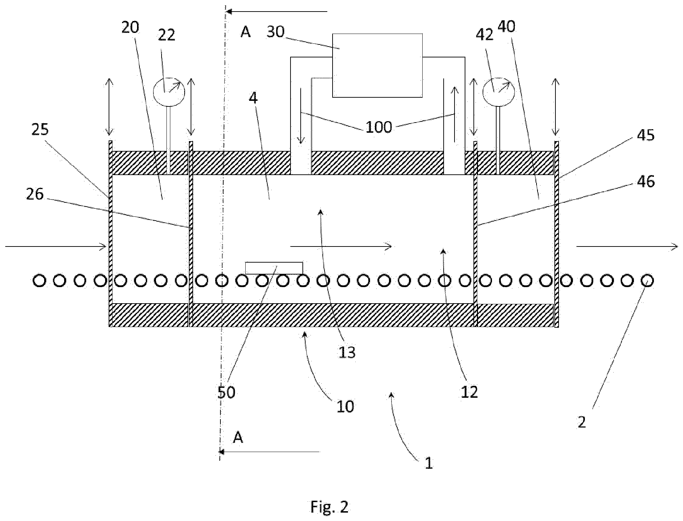

**Fig. 2** ist die schematische Darstellung eines erfindungsgemäßen Durchlaufofens. Ein metallisches Bauteil 50 wird in Pfeilrichtung auf Rollen 2 durch den Ofen gefahren. Dabei kann das metallische Bauteil 50 ein einzelnes Bauteil sein, das beispielsweise für eine Sinterbehandlung dem Durchlaufofen 1 zugeführt wird. Die Wärmebehandlung kann auch ein Lötverfahren einschließen. Dabei besteht das metallische Bauteil 1 aus mindestens zwei Einzelteilen, die an einander angrenzen und durch ein Lotmaterial, das sich beispielsweise pastenförmig zwischen den Einzelteilen befindet, voneinander beabstandet sind. Während der Wärmebehandlung schmilzt das Lot auf und diffundiert in die Oberflächen der Einzelteile ein. Der Ofen besitzt eine Vakuumkammer 20, die in Durchlaufrichtung vor der Ofenkammer 5 angeordnet und gasdicht mit dieser verbunden ist. Die Vakuumkammer 20 weist eine gasdicht verschließbare Tür 25 zur Außenatmosphäre hin und eine weitere gasdicht verschließbare Tür 26 zur Ofenkammer 5 hin auf. Das metallische Bauteil 50 wird auf den Rollen 2 nach Öffnung der zur Außenatmosphäre hin gelegenen Tür 25 in die Vakuumkammer 20 hinein transportiert. Gleichzeitig kann Luft aus der Außenatmosphäre in die Vakuumkammer 20 hinein strömen. Die Tür 25 schließt und anschließend wird Vakuum gezogen. Der erreichte Unterdruck kann an einem Manometer 22 abgelesen werden. nach Erreichen eines Sollunterdrucks von beispielsweise 10 - 100 mbar wird die Tür 26 zur Ofenkammer 5 hin geöffnet und das metallische Bauteil 50 auf den Rollen 2 in die Offenkammer 5 verbracht. Die Tür 26 kann anschließend wieder verschlossen werden. Während der Öffnung der Tür 26 strömt Gas aus der Ofenkammeratmosphäre in die Vakuumkammer 20. Die Ofenkammer 5 weist Mittel zur Beheizung des metallischen Bauteils 50 auf (nicht gezeigt). Dabei kann es sich um Strahlungsheizungen handeln. Diese Heizungen heizen nicht nur das metallische Bauteil 50 auf eine für den jeweiligen Wärmebehandlungsprozess erforderliche Temperatur auf, sondern auch das Gas in der Kammeratmosphäre. Neben Strahlungsheizungen sind auch alle anderen geeigneten Heizungsarten vorstellbar.

Die Ofenkammeratmosphäre 11 besteht aus einem Schutzgas 100, beispielsweise aus Wasserstoffgas. Auch eine Mischung aus Wasserstoffgas plus einem neutralgas wie beispielsweise Stickstoff oder Argon kann als Schutzgas benutzt werden, wobei der erforderliche niedrige Wassergehalt sich stets auf den Wasserstoffanteil bezieht. Dieses Schutzgas 100 muss in einer ausreichenden Reinheit vorliegen. In der Ofenatmosphäre 11 eventuell vorhandener Sauerstoff wird mit dem Wasserstoff des Schutzgases 100 Wasser bilden. Der Taupunkt der Ofenatmosphäre 11 ist daher ein Indikator für die Reinheit des Schutzgases 100 in der Ofenatmosphäre 11. Der Taupunkt kann mit bekannten Mitteln mit geringem Aufwand gemessen werden, so dass über eine Taupunktmessung die Reinheit der Ofenatmosphäre 11 leicht bestimmbar ist.

Der Durchlaufofen 1 weist einen Endbereich 12 des Wärmebehandlungsabschnitts 10 auf, wobei der Endbereich 12 eine Entnahmeöffnung für das Schutzgas 100 aus der Ofenatmosphäre 11 aufweist. Weiterhin weist der Durchlaufofen 1 ein Molekularsieb 30 auf, das sich außerhalb der Ofenkammer 5 befindet. Das durch die Entnahmeöffnung des Endbereichs 12 entnommene Schutzgas 100 wird in dem Molekularsieb 30 gereinigt. Bei dieser Reinigung werden dem Schutzgas 100 Wassermoleküle entzogen. Ein geeignetes Molekularsieb 30 weist dabei in seinem Inneren Zeolithe, das heißt kristalline Alumosilikate, auf, die eine große innere Oberfläche besitzen. Es werden dabei Oberflächen von beispielsweise ca. 600 - 700 m2/g erreicht. Die Zeolithe weisen einen im Wesentlichen einheitlichen Porendurchmesser in der Größenordnung der zu filternden Moleküle auf. Für die Filterung von Wassermolekülen hat sich ein Porendurchmesser von ca. 0,3- 0,4 nm als geeignet erwiesen.

Der Durchlaufofen 1 weist weiterhin einen Mittenbereich 13 des Wärmebehandlungsabschnitts 10 auf, wobei der Mittenbereich 13 des Wärmebehandlungsabschnitts 10 eine Zuführungsöffnung aufweist, durch die das Schutzgas 100 in gereinigter Form der Ofenatmosphäre 11 wieder zugesetzt werden kann.

Das Schutzgas 100 kann dem Wärmebehandlungsabschnitt 10 kontinuierlich durch die Entnahmeöffnung entnommen, in dem Molekularsieb 30 gereinigt und der Ofenatmosphäre 11 durch die Zuführungsöffnung wieder zugeführt werden. Alternativ kann das Schutzgas 100 aber auch diskontinuierlich gereinigt werden. Dazu kann über eine Taupunktmessung der Ofenatmosphäre 11 der Reinigungsbedarf ermittelt und die Reinigung bei Erreichen eines zuvor definierten Grenzwertes gestartet werden. Der Grenzwert kann beispielsweise bei einem Verhältnis von Wasserstoff zu Wasser von mehr als 1.000 liegen. Dazu weist der Durchlaufofen 1 ein Mittel zur Taupunktmessung der Ofenatmosphäre 11 auf (nicht gezeigt). Bei Erreichen des Grenzwertes wird das Schutzgas 100 aus dem Wärmebehandlungsabschnitt 10 abgesaugt und dem Molekularsieb 30 zugeführt, darin gereinigt, und dem Wärmebehandlungsabschnitt 10 in gereinigter Form wieder zugeführt.

Nach erfolgter Wärmebehandlung wird das metallische Bauteil 50 in eine Vakuumkammer 40, die sich in Durchlaufrichtung des metallischen Bauteils 50 durch den Durchlaufofen 1 hinter dem Wärmebehandlungsabschnitt 10 befindet, verbracht. Die Vakuumkammer 40 ist gasdicht mit dem Wärmebehandlungsabschnitt 10 verbunden und weist an ihrer dem Wärmebehandlungsabschnitt 10 zugewandten Seite eine Tür 46 auf. An ihrer entgegengesetzten Seite weist die Vakuumkammer 40 eine Tür 45 auf. Zur Einbringung des metallischen Bauteils 50 aus dem Wärmebehandlungsabschnitt 10 in die Vakuumkammer 40 wird die Tür 46 geöffnet und nach der Einbringung des metallischen Bauteils 50 wieder geschlossen. Anschließend wird Vakuum gezogen. Nach Erreichen eines zuvor definierten Unterdrucks von beispielsweise von 10 - 100 mbar wird die Tür 45 der Vakuumkammer 40 zur Außenatmosphäre hin geöffnet und das metallische Bauteil 50 aus dem Durchlaufofen 1 transportiert. Durch das Evakuieren vor und nach der Wärmebehandlung wird vermieden, dass sich das Schutzgas 100 mit anderen Gasen, insbesondere mit Luftsauerstoff, vermischen kann. Darüber hinaus entweichen keine größeren Mengen wasserstoffhaltiges Schutzgas 100 in die Atmosphäre außerhalb des Durchlaufofens 1, wodurch der Explosionsgefahr vorgebeugt wird und der Schutzgasverbrauch des Durchlaufofens 1 minimiert wird. Durch die Reinigung des Schutzgases 100 steht ausreichend reines Schutzgas 100 für den Prozess zur Verfügung.

Die gesamte Anlage wird mit einem Überdruck von beispielsweise ca. 30 mbar gegenüber der Umgebung betrieben. Auf diese Art kann im Fall einer Leckage kein Luftsauerstoff eindringen und die Leckage schnell und zuverlässig lokalisiert werden.

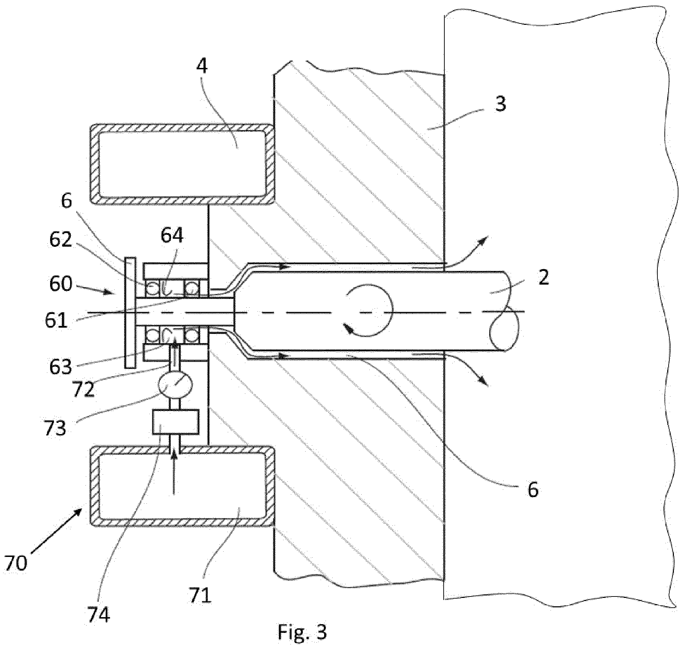

Der Durchlaufofen 1 weist mindestens eine antreibbare Rolle2 zum Transport eines metallischen Bauteils 1 auf. In **Fig. 3** ist die Lagerung einer Rolle eines erfindungsgemäßen Durchlaufofens dargestellt. Die Ofenkammer 5 des Rollenherdofens 1 weist auf beiden Seiten jeweils eine Ofenwand 3 zur seitlichen Begrenzung der Ofenkammer 5 auf. Die Rolle 2 ist durch die seitlichen Ofenwände 3 hindurchgeführt und in einer Wälzlagereinheit 60 außerhalb der Ofenkammer 5 aufgenommen. Jeweils an der Außenseite der beiden Ofenwände 3 der Ofenkammer 5 kann ein Stabilisator 4 zur mechanischen Stabilisierung der Ofenkammer 5 angeordnet sein. Diese mechanische Stabilisierung kann erforderlich sein, da das Material der Ofenwände 3 durch die teilweise sehr hohen Temperaturunterschiede zwischen dem Innenraum der Ofenkammer 5 und ihrer Umgebung großen thermischen Belastungen unterliegt, die zu Verformungen der Ofenwände 3 führen können. Obwohl hier beispielhaft nur ein Stabilisator 4 dargestellt ist, können aber auch mehrere Stabilisatoren 4 zur Erhöhung der Stabilisierungswirkung an den Außenseiten der beiden Ofenwände 3 angeordnet sein. Je nach Betriebsparametern und Ofenkonstruktion kann aber auch auf Stabilisatoren verzichtet werden. Weiterhin befindet sich jeweils an der Außenseite der beiden Ofenwände 3 ein Spülsystem 70 zum Spülen der ebenfalls dort angeordneten Wälzlagereinheit 60. Die Wälzlagereinheit 60 an der Außenseite der beiden Außenwände 3 der Ofenkammer 5 dient jeweils der Aufnahme und Lagerung eines der beiden Enden der einzelnen Rollen 2 des Durchlaufofens 1. Damit die Rollen 2 in den Wälzlagereinheiten 60 außerhalb der Ofenkammer 5 gelagert werden können, sind in den Ofenwänden 3 Öffnungen 6 ausgebildet, durch die die einzelnen Rollen 2 jeweils aus der Ofenkammer 5 heraus nach außen in die zugehörige Wälzlagereinheit 60 geführt werden. Ein wesentlicher Bestandteil der Wälzlagereinheiten 60 zur beidseitigen Aufnahme und Lagerung der einzelnen Rollen 2 sind Wälzlager 61,62. In Fig. 3 sind die Wälzlager 61,62 als Kugellager ausgebildet. Andere bekannte Wälzlagerformen sind jedoch ebenso möglich. Zwischen den einzelnen Kugeln der Kugellager 61,62 sind Hohlräume ausgebildet, die mit einem Schmierstoff (nicht gezeigt) gefüllt sind. Dieser Schmierstoff hat insbesondere die Aufgabe, die während der Rollbewe-gungen der Kugeln auftretende Reibung zwischen den Kugeln und den beiden Ringen, auf der die Kugeln abrollen, zu verringern und dadurch die Verlustleistung und den Verschleiß des Kugellagers 61, 62 zu minimieren. Als Schmierstoff geeignet sind dabei alle bekannten Schmierstoffe und -fette, die in Wälzlagern üblicherweise zur Anwendung kommen. Da die Lagerung der Rolle 2 außerhalb der Ofenkammer 5 erfolgt, ist in der Ofenwand 3 eine Öffnung 6 ausgebildet, durch die die Rolle 2 aus der Ofenkammer 5 heraus nach außen in die zugehörige Wälzlagereinheit 60 geführt wird. Die Lagerung der Rolle 2 in der Wälzlagereinheit 60 wird über ein Kugellagerpaar realisiert, das aus einem inneren Kugellager 61 und einem äußeren Kugellager 62 gebildet wird. Dabei ist das innere Kugellager 61 des Kugellagerpaares näher an der Ofenwand 3 angeordnet als das äußere Kugellager 62 und beide Kugellager 61 und 62 sind so nebeneinander angeordnet, dass zwischen den beiden Kugellagern 61 und 62 des Kugellagerpaares ein Hohlraum 63 ausgebildet wird. Im Inneren des Hohlraumes 63 an der Seite des äußeren Kugellagers 62, die zum Hohlraum 63 ausgerichtet ist, ist ein Dichtelement 64 angeordnet. Aufgabe dieses Dichtelementes 64 ist es, den Hohlraum 63 so abzudichten, dass kein Spülgas aus dem Hohlraum 63 in das äußere Kugellager 62 eindringen kann. Dafür kann das Dichtelement 64 als Wellendichtring, beispielsweise als Radialwellendichtring, ausgebildet sein. Die Sicherung des äußeren Kugellagers 62 auf der Rolle 2 erfolgt über einen Sicherungsring 65, der am Ende der Rolle 2 montiert wird. Bei diesem Sicherungsring 65 handelt es sich beispielsweise um ein entsprechendes Normteil nach DIN 471. Es können aber auch andere Sicherungen für das äußere Kugellager 62 verwendet werden.

In einer weiteren Ausführungsform ist eine drucküberwachte Sperrgaskammer vorgesehen, mit deren Hilfe die Dichtigkeit der Lagereinheit stet überprüft werden kann. Dazu kann im Inneren des Hohlraums 63 einer Wälzlagereinheit 60 ein weiteres Dichtelement so angeordnet werden, dass eine Kammer ausgebildet wird. Mit einer an diese Kammer angeschlossenen Druckübenivachung besteht dann die Möglichkeit, den Druck in der Kammer zu überwachen und bei einem registrierten Druckabfall in dieser Kammer, die betroffene Wälzlagereinheit 60 entsprechend auszutauschen.

Mit der Wälzlagereinheit 60 ist das Spülsystem 70 verbunden. Ein Bestandteil dieses Spülsystems 70 ist ein Rohrleitungssystem 71, das unterhalb der Wälzlagereinheit 60 angeordnet ist und das über eine Zuleitung 72 an den Hohlraum 63 des Wälzlagerpaares 61,62 der Wälzlagereinheit 60 angebunden ist. In die Zuleitung 72 integriert sind ein Strömungsmesser 73 sowie ein Steuerungselement 74.

Als Rohrleitungssystem 71 für das Spülgas können an der Außenseite der Ofenwand 3 beispielsweise separate Gasleitungen installiert werden. Es ist aber auch möglich, konstruktionsbedingt bereits vorhandene Rohre oder Gehäuse des Durchlaufofens 1, die entsprechend den bereits beschriebenen Stabilisatoren 4 als weitere Stabilisatoren 4 an der Außenseite der Ofenwand 3 angeordnet sind, als Rohrleitungssystem 71 für das Spülgas zu nutzen.

Die Zuleitung 72 kann beispielsweise als flexibler Gummi- oder Silikonschlauch ausgeführt werden. Es können aber auch feste Leitungen beispielsweise aus Kunststoff oder Metall installiert werden. Bei der Materialauswahl für die Zuleitung 72 sind vor allem die Anforderungen des verwendeten Spülgases hinsichtlich einer chemischen Beständigkeit sowie die geplanten Druckverhältnisse zu berücksichtigen.

Für eine leichte und einfache Montage kann die Zuleitung 72 beispielsweise jeweils über Steckverbindungen mit dem Hohlraum 63 und dem Rohrleitungssystem 71 verbunden werden. Es sind aber auch andere Verbindungsarten möglich.

Zum Spülen des inneren Kugellagers 61 wird in das Rohrleitungssystem 71 ein konditioniertes Spülgas eingespeist. In Abhängigkeit von der Art des Durchlaufofens 1 kann es sich bei dem Spülgas beispielsweise um ein Schutzgas für Öfen mit Schutzgasatmosphäre oder auch um einen Luftstrom für Öfen mit Luft handeln. Andere Gase sind aber ebenfalls als Spülgas verwendbar.

Das Spülgas wird im Rohrleitungssystem 71 mit einem Druck bereitgestellt, der einen Gasstrom in einer Größenordnung von ungefähr 10l pro Stunde erzeugt. Die Strömungsgeschwindigkeit des Spülgases kann am Strömungsmesser 73 entsprechend abgelesen und überwacht werden. Eine Regulierung des Gasstromes erfolgt mittels des Steuerungselementes 74, bei dem es sich im einfachsten Fall um eine Drossel oder um ein Einstellventil zur manuellen Einstellung des Gasstromes handelt. Ebenfalls als Steuerungselement 74 verwendbar sind einstellbare Düsen oder Blenden, mit denen die Strömungsgeschwindigkeit des Spülgases beeinflusst werden kann, indem beispielsweise Form und Größe der Düsen- oder Blendenöffnungen variiert werden. Weiterhin besteht die Möglichkeit, ein komplexes Steuerungselement 74 zu installieren, über das eine automatische Steuerung des Gasstromes möglich ist.

Durch den anliegenden Druck wird das Spülgas aus dem Rohrleitungssystem 71 über die Zuleitung 72 in den Hohlraum 63 des Kugellagerpaares eingeleitet. Dabei wird auch das innere Kugellager 61 entsprechend angeströmt. Das Spülgas durchströmt das angeströmte innere Kugellager 61, indem es auf der Seite des inneren Kugellagers 61, die zum Hohlraum 63 ausgerichtet ist in das innere Kugellager 61 eindringt und auf der Seite des inneren Kugellagers 61, die zur Ofenwand 3 ausgerichtet ist, wieder austritt. Ein gleichzeitiges Durchströmen des äußeren Kugellagers 62 ist dabei nicht möglich, da das äußere Kugellager 62 bedingt durch das Dichtelement 64 vom Spülgas nicht angeströmt werden kann.

Nach dem Durchströmen des inneren Kugellagers 61 kann das Spülgas dann weiter durch die Öffnung 6 in der Ofenwand 3 in das Innere der Ofenkammer 5 strömen. Der gesamte Strömungsweg des Spülgases aus dem Rohrleitungssystem 71 durch die Zuleitung 72 in den Hohlraum 63 und dann weiter durch das innere Kugellager 61 und durch die Öffnung 6 in der Ofenwand 3 in die Ofenkammer 5 ist entsprechend durch Pfeile gekennzeichnet. Da als Spül- oder Sperrgas stets Neutralgas wie Stickstoff oder Argon verwendet wird, dient in die Ofenkammer eingetragenes Spül- oder Sperrgas auch als Schutzgas, wenn das erforderliche Wasserstoff- zu Wasserverhältnis wie oben beschrieben eingehalten wird.

Über den eingestellten Druck des Spülgases kann zuverlässig und effektiv verhindert werden, dass Ofengas aus der Ofenkammer 5 durch die Öffnung 6 und durch das innere Kugellager 61 strömt. Dadurch wird verhindert, dass sich der Schmierstoff des inneren Kugellagers 61, bedingt durch heißes mineralstaubbelastetes Ofengas, auflöst. Weiterhin wird zuverlässig verhindert, dass die während der Drehung der Rollen 2 und der damit verbundenen Reibung an der keramischen Isolierwand des Durchlaufofens 1 entstehenden Partikel mit dem Ofengas in das innere Kugellager 61 eingetragen werden. Vielmehr wird das innere Kugellager 61 durch das Spülgas frei von Partikeln gehalten, da das Spülgas nicht verunreinigt ist. Zudem ist die Temperatur des Spülgases wesentlich niedriger als die Temperatur des Ofengases, da es an der Außenseite des Durchlaufofens 1 an die Wälzlagereinheit 60 herangeführt wird, sodass sich der Schmierstoff während des Durchströmens auch nicht auflöst.

Da ein Durchlaufofen einen Rollenförderer aus vielen, hintereinander angeordneten Rollen 2 aufweisen kann, weisen die beiden Ofenwände 3 eine entsprechende Anzahl von Öffnungen 6 auf, durch die die Rollen 2 aus der Ofenkammer 5 heraus in die entsprechend zugehörigen Wälzlagereinheiten 60 geführt werden. Jede dieser Wälzlagereinheiten 60 ist gekennzeichnet durch ein Wälzlagerpaar mit einem inneren Wälzlager 61 und einem äußeren Wälzlager 62, zwischen denen jeweils ein Hohlraum 63 ausgebildet wird, von denen wiederum jeder über eine separate Zuleitung 72 mit dem Rohrleitungssystem 71 verbunden ist. In jede separate Zuleitung 72 sind dabei sowohl ein Strömungsmesser 73 als auch ein Steuerungselement 74 integriert.

Das Rohrleitungssystem 71 benötigt zwar nur einen Anschluss für die Zufuhr des Spülgases in das Rohrleitungssystem 71, auch wenn mehrere Anschlüsse dafür vorgesehen werden können, aber es versorgt eine Vielzahl von inneren Kugellagern 61 mit Spülgas und gewährleistet damit, dass der Verschleiß aller inneren Kugellager 61 entsprechend reduziert wird.

### Bezugszeichenliste:

- A: Punkt auf der□ G0 - Kurve für Fe / FeO (□GO für Fe/FeO für 1200°C)
- B: Punkt auf der pO2 - Skala (Dissoziationsdruck für FeO für 1200°C)
- C: Punkt auf Verhältnisskala H2/H2O (Verhältnis H2/H2O zur Bildung von FeO bei 1200°C)
- 1: Durchlaufofen
- 2: Rolle
- 3: seitliche Ofenwand
- 4: Stabilisator
- 5: Ofenkammer
- 6: Öffnung
- 10: Wärmebehandlungsabschnitt
- 11: Ofenatmosphäre
- 12: Endbereich des Wärmebehandlungsabschnitts
- 13: Mittenbereich des Wärmebehandlungsabschnitts
- 20: Vakuumkammer
- 22: Manometer
- 25: Tür
- 26: Tür
- 30: Molekularsieb
- 40: Vakuumkammer
- 42: Manometer
- 45: Tür
- 46: Tür
- 50: metallisches Bauteil
- 60: Wälzlagereinheit
- 61: inneres Wälzlager / Kugellager
- 62: äußeres Wälzlager / Kugellager
- 63: Hohlraum
- 64: Dichtelement
- 65: Sicherungsring
- 70: Spülsystem
- 71: Rohrleitungssystem
- 72: Zuleitung
- 73: Strömungsmesser
- 74: Steuerungselement
- 100: Schutzgas

## Patentansprüche

1. Verfahren zur Wärmebehandlung eines metallischen Bauteils (50) unter einer wasserstoffhaltigen Schutzgasatmosphäre, wobei
- das metallische Bauteil (50) in eine Vakuumkammer (20, 21) eingebracht wird,
- Vakuum gezogen wird,
- das metallische Bauteil (50) zur Wärmebehandlung in einen an die Vakuumkammer (20, 21) angrenzenden und mit einer wasserstoffhaltigen Schutzgasatmosphäre gefüllten Wärmebehandlungsabschnitt (10) eingebracht wird, wobei das Schutzgas (100) aus dem Wärmebehandlungsabschnitt (10) in einem Molekularsieb (30) gereinigt wird, **dadurch gekennzeichnet, dass** das Schutzgas (100) an einem Endbereich (12) des Wärmebehandlungsabschnitts (10) zur Reinigung entnommen und das gereinigte Schutzgas (100) in einem Mittenbereich (13) des Wärmebehandlungsabschnitts (10) zugeführt wird, wobei die gesamte Anlage mit einem Überdruck gegenüber der Umgebung betrieben wird,
- das metallische Bauteil (50) nach der erfolgten Wärmebehandlung in eine Vakuumkammer (20, 21) eingebracht wird,
- Vakuum gezogen wird, und
- das metallische Bauteil (50) anschließend in die Außenatmosphäre verbracht wird.

2. Verfahren nach Anspruch 1,
**dadurch gekennzeichnet,**
**dass** das Schutzgas (100) aus dem Wärmebehandlungsabschnitt (10) kontinuierlich gereinigt wird.

3. Verfahren nach Anspruch 1,
**dadurch gekennzeichnet,**
**dass** das Schutzgas (100) aus dem Wärmebehandlungsabschnitt (10) diskontinuierlich gereinigt wird.

4. Verfahren nach Anspruch 3,
**dadurch gekennzeichnet,**
**dass** das Schutzgas (100) auf Basis eines aus einer Taupunktmessung ermittelten Bedarfs gereinigt wird.

5. Verfahren nach einem der vorhergehenden Ansprüche,
**dadurch gekennzeichnet,**
**dass** die Wärmebehandlung ein Lötverfahren einschließt.

6. Durchlaufofen (1) zur Wärmebehandlung eines metallischen Bauteiles (50), aufweisend einen Wärmebehandlungsabschnitt (10), der eine Ofenatmosphäre (11) aufweist, die mit einem Wasserstoff enthaltenden Schutzgas (100) geflutet werden kann, und der einen Endbereich (12) und einen Mittenbereich (13) aufweist, wobei an den Wärmebehandlungsabschnitt (10) mindestens eine Vakuumkammer (20, 21) angrenzt, wobei die Vakuumkammer (20, 21) gasdicht mit dem Wärmebehandlungsabschnitt (10) verbunden ist, und wobei der Durchlaufofen (1) weiterhin ein Molekularsieb (30) zum Ausfiltern von Wassermolekülen aus dem Schutzgas (100) der Ofenatmosphäre (11) aufweist, **dadurch gekennzeichnet, dass** der Durchlaufofen (1) weiterhin einen Endbereich (12) des Wärmebehandlungsabschnitts (10) aufweist, wobei der Endbereich (12) eine Entnahmeöffnung für das Schutzgas (100) aufweist und der Wärmebehandlungsabschnitt (10) des Durchlaufofens (1) einen Mittenbereich (13) aufweist, wobei der Mittenbereich (13) eine Zuführungsöffnung für das gereinigte Schutzgas (100) aufweist.

7. Durchlaufofen (1) nach Anspruch 6,
**dadurch gekennzeichnet,**
**dass** der Durchlaufofen (1) zwei Vakuumkammern (20, 21) aufweist, wobei jeweils eine Vakuumkammer (20, 21) in Durchlaufrichtung vor und nach dem Wärmebehandlungsabschnitt (10) angeordnet ist.

8. Durchlaufofen (1) nach einem oder mehreren der Ansprüche 6 bis 7,
**dadurch gekennzeichnet,**
**dass** der Durchlaufofen (1) ein Mittel zur Taupunktmessung der Ofenatmosphäre (11) aufweist.

9. Durchlaufofens (1) nach einem der Ansprüche 6 bis 8,
**dadurch gekennzeichnet,**
**dass** der Durchlaufofen (1) antreibbare Rollen (2) zum Transport eines metallischen Bauteils (50) durch den Durchlaufofen (1) aufweist.

10. Durchlaufofen (1) nach einem der Ansprüche 6 bis 9,
**dadurch gekennzeichnet,**
**dass** der Durchlaufofen (1) ein Rollenherdofen ist, der mindestens zwei seitliche Ofenwände (3, 3') aufweist, die die seitliche Begrenzung einer Ofenkammer (5) bilden, wobei innerhalb der Ofenkammer (5) wenigstens eine Transportrolle (2) zum Transport des metallischen Bauteils (50) durch die Ofenkammer (5) angeordnet ist und wobei die Ofenwände (3) jeweils wenigstens eine Öffnung (6) aufweisen, durch welche die Transportrolle (2) hindurchführbar ist und wobei an einer Außenseite der Ofenwände (3) jeweils mindestens eine Wälzlagereinheit (60) angeordnet ist, die dazu ausgebildet ist, die Transportrolle (2) außerhalb der Ofenkammer (5) aufzunehmen und zu lagern.

11. Durchlaufofen (1) nach Anspruch 10,
**dadurch gekennzeichnet,**
**dass** der Rollenherdofen (1) ein Spülsystem (70) für die Wälzlagereinheit (60) aufweist, das dazu ausgebildet ist, ein Spülgas durch die Wälzlagereinheit (60) zu leiten, wobei das Spülgas von einer von der Ofenwand (3) abgewandten Seite der Wälzlagereinheit (60) durch die Wälzlagereinheit (60) und durch die Öffnung (6) der Ofenwand (3) hindurch in die Ofenkammer (5) des Rollenherdofens (1) leitbar ist und wobei das Spülgas mit einem Druck bereitstellbar ist, der größer ist als ein Innendruck in der Ofenkammer (5) des Rollenherdofens (1).

## Claims

1. A method for thermally treating a metallic component (50) under a hydrogen-containing inert gas atmosphere, wherein
- the metallic component (50) is introduced into a vacuum chamber (20, 21),
- vacuum is drawn,
- the metallic component (50) is introduced into a thermal treatment section (10) filled with a hydrogen-containing inert gas atmosphere for heat treatment, which section is adjacent to the vacuum chamber (20, 21), wherein the inert gas (100) is purified from the thermal treatment section (10) in a molecular sieve (30), **characterized in that** the inert gas (100) is removed for purification at an end portion (12) of the thermal treatment section (10) and the purified inert gas (100) is fed in a center portion (13) of the thermal treatment section (10), wherein the whole system is operated with an above-atmospheric pressure,
- the metallic component (50) is introduced into a vacuum chamber (20, 21) after thermal treatment has taken place,
- vacuum is drawn, and
- the metallic component (50) is then passed into the external atmosphere.

2. The method according to claim 1,
**characterized in that**
the inert gas (100) from the thermal treatment section (10) is purified continuously.

3. The method according to claim 1,
**characterized in that**
the inert gas (100) from the thermal treatment section (10) is purified discontinuously.

4. The method according to claim 3,
**characterized in that**
the inert gas (100) is purified on the basis of a requirement ascertained from a dew-point measurement.

5. The method according to one of the preceding claims,
**characterized in that**
the thermal treatment includes a soldering method.

6. A continuous furnace (1) for thermally treating a metallic component (50), having a thermal treatment section (10) which has a furnace atmosphere (11) which can be flooded with a hydrogen-containing inert gas (100), and which has an end portion (12) and a center portion (13), wherein at least one vacuum chamber (20, 21) is adjacent to the thermal treatment section (10), wherein the vacuum chamber (20, 21) is connected gas-tight to the thermal treatment section (10), and wherein the continuous furnace (1) also has a molecular sieve (30) for filtering out water molecules from the inert gas (100) of the furnace atmosphere (11), **characterized in that** the continuous furnace (1) also has an end portion (12) of the thermal treatment section (10), wherein the end portion (12) has an outlet opening for the inert gas (100) and the thermal treatment section (10) of the continuous furnace (1) has a center portion (13), wherein the center portion (13) has a feed opening for the purified inert gas (100).

7. The continuous furnace (1) according to claim 6,
**characterized in that**
the continuous furnace (1) has two vacuum chambers (20, 21), wherein in each case a vacuum chamber (20, 21) is arranged in direction of traverse before and after the thermal treatment section (10).

8. The continuous furnace (1) according to one or more of claims 6 to 7,
**characterized in that**
the continuous furnace (1) has a means for measuring the dew point of the furnace atmosphere (11).

9. The continuous furnace (1) according to one of claims 6 to 8,
**characterized in that**
the continuous furnace (1) has drivable rollers (2) for transporting a metallic component (50) through the continuous furnace (1).

10. The continuous furnace (1) according to one of claims 6 to 9,
**characterized in that**
the continuous furnace (1) is a roller hearth furnace which has at least two lateral furnace walls (3, 3¹) which form the lateral boundary of a furnace chamber (5), wherein at least one transport roller (2) is arranged within the furnace chamber (5) for transporting the metallic component (50) through the furnace chamber (5) and wherein the furnace walls (3) each have at least one opening (6), through which the transport roller (2) can be fed and wherein at least one roller bearing unit (60) is attached to an outer side of each of the furnace walls (3), which unit is designed to accommodate and store the transport roller (2) outside of the furnace chamber (5).

11. The continuous furnace (1) according to claim 10,
**characterized in that**
the roller hearth furnace (1) has a flushing system (70) for the roller bearing unit (60), which system is designed to conduct a flushing gas through the roller bearing unit (60), wherein the flushing gas can be conducted through the roller bearing unit (60) and through the opening (6) of the furnace wall (3) into the furnace chamber (5) of the roller hearth furnace (1) from a side of the roller bearing unit (60) facing away from the furnace wall (3), and wherein the flushing gas can be provided with a pressure which is greater than an internal pressure in the furnace chamber (5) of the roller hearth furnace (1).

## Revendications

1. Procédé pour le traitement thermique d'un composant métallique (50) sous atmosphère protectrice contenant de l'hydrogène, dans lequel
- le composant métallique (50) est introduit dans une chambre sous vide (20, 21),
- le vide est établi,
- le composant métallique (50) est introduit pour le traitement thermique dans une section de traitement thermique (10) adjacente à la chambre sous vide (20, 21) et remplie d'atmosphère protectrice contenant de l'hydrogène, le gaz protecteur (100) sortant de la section de traitement thermique (10) étant nettoyé dans un tamis moléculaire (30), **caractérisé en ce que** le gaz protecteur (100) est prélevé dans une zone d'extrémité (12) de la section de traitement thermique (10) pour le nettoyage et le gaz protecteur nettoyé (100) est amené dans une zone centrale (13) de la section de traitement thermique (10), l'ensemble de l'installation fonctionnant à une surpression par rapport à l'environnement,
- le composé métallique (50) est introduit dans une chambre sous vide (20, 21) après réalisation du traitement thermique,
- le vide est établi, et
- le composant métallique (50) est ensuite amené dans l'atmosphère extérieure.

2. Procédé selon la revendication 1,
**caractérisé en ce que**
le gaz protecteur (100) sortant de la section de traitement thermique (10) est nettoyé en continu.

3. Procédé selon la revendication 1,
**caractérisé en ce que**
le gaz protecteur (100) sortant de la section de traitement thermique (10) est nettoyé en discontinu.

4. Procédé selon la revendication 3,
**caractérisé en ce que**
le gaz protecteur (100) est nettoyé suivant le besoin déterminé à partir d'une mesure du point de rosée.

5. Procédé selon l'une quelconque des revendications précédentes,
**caractérisé en ce que**
le traitement thermique comprend un procédé de brasage.

6. Four continu (1) pour le traitement thermique d'un composant métallique (50), comportant une section de traitement thermique (10), qui possède une atmosphère de four (11) qui peut être inondé avec un gaz protecteur contenant de l'hydrogène, et qui comporte une zone d'extrémité (12) et une zone centrale (13), au moins une chambre sous vide (20, 21) étant adjacente à la section de traitement thermique (10), la chambre sous vide (20, 21) étant reliée à la section de traitement thermique (10) de manière étanche aux gaz, et le four continu (1) comportant en outre un tamis moléculaire (30) destiné à éliminer les molécules d'eau du gaz protecteur (100) de l'atmosphère de four (11) par filtrage, **caractérisé en ce que** le four continu (1) comporte en outre une zone d'extrémité (12) de la section de traitement thermique (10), la zone d'extrémité (12) comportant un orifice de prélèvement du gaz protecteur (100) et la section de traitement thermique (10) du four continu (1) comportant une zone centrale (13), la zone centrale (13) comportant un orifice d'amenée du gaz protecteur nettoyé (100).

7. Four continu (1) selon la revendication 6,
**caractérisé en ce que**
le four continu (1) comporte deux chambres sous vide (20, 21), une chambre sous vide (20, 21) étant située en amont respectivement en aval de la section de traitement thermique (10) par référence au sens de passage.

8. Four continu (1) selon une ou plusieurs des revendications 6 à 7,
**caractérisé en ce que**
le four continu (1) comporte un moyen de mesure du point de rosée de l'atmosphère de four (11).

9. Four continu (1) selon l'une des revendications 6 à 8,
**caractérisé en ce que**
le four continu (1) comporte des rouleaux entraînables (2) destinés à transporter un composant métallique (50) à travers le four continu (1).

10. Four continu (1) selon l'une des revendications 6 à 9,
**caractérisé en ce que**
le four continu (1) est un four à rouleaux qui comporte au moins deux parois de four latérales (3, 3') qui forment la délimitation latérale d'une chambre de four (5), au moins un rouleau de transport (2) étant situé à l'intérieur de la chambre de four (5) afin de transporter le composant métallique (50) à travers la chambre de four (5) et les parois (3) du four comportant chacune au moins une ouverture (6) par laquelle le rouleau de transport (2) peut passer, et au moins une unité de palier à roulement (60) étant située sur un côté extérieur de chacune des parois de four (3), laquelle unité est conçue pour recevoir et loger sur palier le rouleau de transport (2) à l'extérieur de la chambre de four (5).

11. Four continu (1) selon la revendication 10,
**caractérisé en ce que**
le four à rouleaux (1) comporte un système de rinçage (70), destiné à l'unité de palier à roulement (60), qui est conçu pour diriger un gaz de rinçage à travers l'unité de palier à roulement (60), le gaz de rinçage pouvant être dirigé d'un côté de l'unité de palier à roulement (60) qui est opposé à la paroi de four (3) jusque dans la chambre (5) du four à rouleaux (1) en passant par l'unité de palier à roulement (60) et par l'ouverture (6) de la paroi de four (3) et le gaz de rinçage pouvant être fourni à une pression supérieure à la pression intérieure de la chambre (5) du four à rouleaux (1).
